# EUROPÄISCHE PATENTANMELDUNG

(11) **EP 0 835 711 A2**
(43) Veröffentlichungstag der Anmeldung: **15.04.1998**
(21) Anmeldenummer: 97112348.4
(22) Anmeldetag: 18.07.1997
(51) Int. Cl.: B23K 9/32

(54) **Schweiss- und Schneidbrenner mit Rauchgasabsaugvorrichtung**

(30) Priorität: 12.10.1996 DE 29617751 U
(71) Anmelder: TBi Industries GmbH & Co. KG, 35463 Fernwald/Steinbach (DE)
(72) Erfinder: Bürkner, Gunnar, Dr., 01324 Dresden (DE); Herber, Wolfgang, 35305 Grünberg-Weickartshaim (DE)
(74) Vertreter: Zieger, Sieglinde, Dipl.-Chem. Petra & Zieger Patentanwälte

(57) **Zusammenfassung**

Gegenstand der Erfindung ist eine Rauchgasabsaugvorrichtung für Schweiß- und Schneidbrenner, die mit Schutzgas und Luft- oder Wasserkühlung arbeiten. Bei allen bisher bekannten Lösungen wird das Rauchgas vom Entstehungsort über ein Absaugrohr in den Griff des Schweiß- und Schneidbrenners und von da über das Schlauchpaket abgeführt. Die Erfindung führt das Rauchgas von der Brennerspitze außerhalb des Griffes des Schweiß- oder Schneidbrenners neben dem Schlauchpaket ab, indem vor dem Übergang Brennerhals-Griff ein Beipass (4) im Absaugstutzen (3) des Absaugrohres (2) angeordnet ist. Das Absaugrohr (2) mit der Absaugdüse (1) und dem Absaugstutzen (3) ist über dem Brennerhals (5) mit der Gasdüse angeordnet. Der Beipass (4) ist als Rohr ausgebildet und geht dann in einen textilen Schlauch über.

## Beschreibung

Gegenstand der Erfindung ist eine Rauchgasabsaugvorrichtung für Schweiß- und Schneidbrenner, die mit Schutzgas und Luft- oder Wasserkühlung arbeiten.

Aus DE-PS 41 14 084 ist ein Griff mit Rauchgasabsaugung bekannt. Der Griff ist nicht wie bisher als Pistole gestaltet, sondern hat Röhrenform und kann dadurch die entstehenden Rauchgase von der Brennerspitze weg in den Griff des Schweiß- und Schneidbrenners führen und über das Schlauchpaket entsorgen. Eine andere Lösung offenbart EP-A2-502 421. Dabei werden Brennerhals und Gasdüse von einem Saugrohr umgeben, welches in Gasdüsennähe als Absaugdüse besonders ausgestaltet ist. Auch hier wird das Rauchgas durch den Griff des Schweiß- und Schneidbrenners und das Schlauchpaket entsorgt. Bei allen bekannten Lösungen wird versucht das Rauchgas vom Entstehungsort, der Schweißnaht, über ein Absaugrohr, das über dem Brenner mit Gasdüse angeordnet ist, in den Griff des Schweiß- und Schneidbrenners und von da über das Schlauchpaket abzuführen.

Vor diesem Hintergrund stellt sich die Erfindung die Aufgabe, das entstehende Rauchgas bei MIG-Schweiß- und Schneidbrennern von der Brennerspitze außerhalb des Schweiß- und Schneidbrennergriffes bzw. des Automatenanschlusses und des Schlauchpaketes abzuführen.

Die Aufgabe der Erfindung wird durch Anordnen eines Beipasses in das Absaugrohr vor dem Übergang Brennerhals-Griff des Schweiß- und Schneidbrenners oder den Automatenanschluß gelöst.

Die Erfindung wird anhand von Zeichnungen näher erläutert. Dabei zeigen:
- Fig.1: Schnittdarstellung eines Schweiß- und Schneidbrenners
- Fig.2: Schnittdarstellung des Details A aus Fig.1
- Fig.3: Schnittdarstellung eines Automatenbrenners.

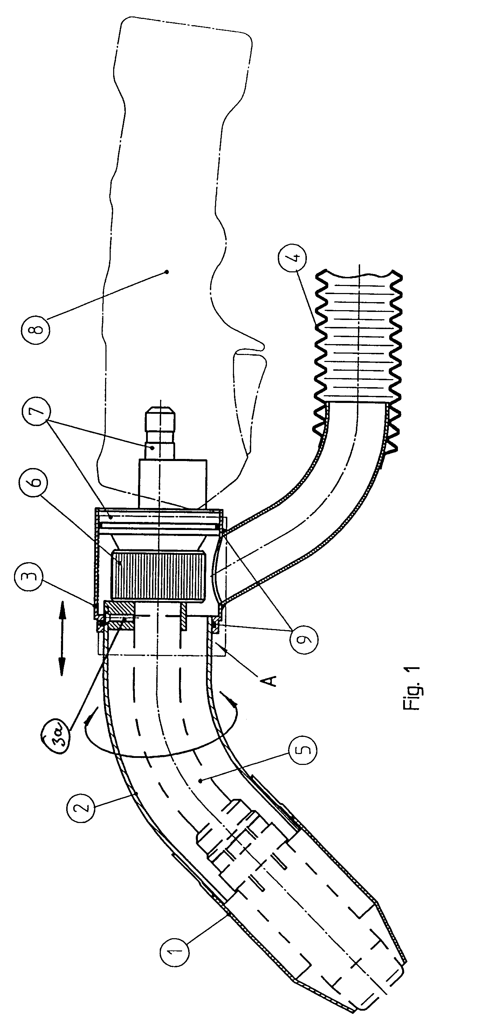

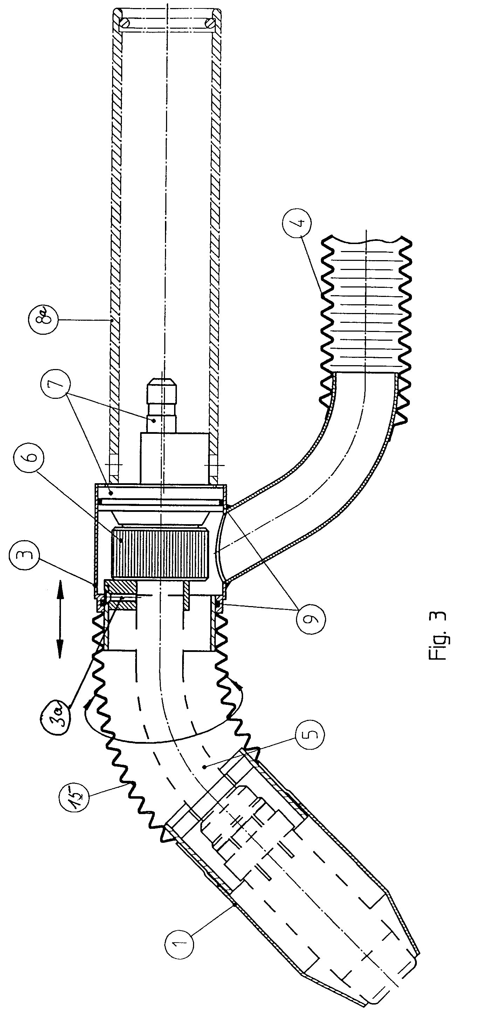

Über den Brennerhals 5 mit Gasdüse und allen anderen bekannten Brennerbauteile ist ein Absaugrohr 2 mit Absaugdüse 1 und Absaugstutzen 3 angeordnet. Absaugdüse 1 wird auf Absaugrohr 2 gesteckt oder geschraubtgesteckt und endet konisch vor der Gasdüse mit einem geringen Abstand zueinander, wie aus Fig.1 und Fig.3 gut zu erkennen ist.

Absaugrohr 2 ist mit Brennerhals 5 fest verbunden über Dreifachsteg 3a und wird in Absaugstutzen 3 drehbar bis 360^{o} gesteckt. Absaugstutzen 3 ist auf dem Aufnahmering des Brennerhalses 5 fest und auf dem Absaugrohr 2 längs verschiebbar angeordnet. In die Brennerhalsaufnahme 7 wird Brennerhals 5 gesteckt und mit der Anordnung von Anschluß- und Dichtkörpern 10,13 auf jeder Seite und gegeneinander abschließende Dichtflächen 11,14 preßt Überwurfmutter 6 Brennerhals 5 und Brennerhalsaufnahme 7 dicht aneinander.

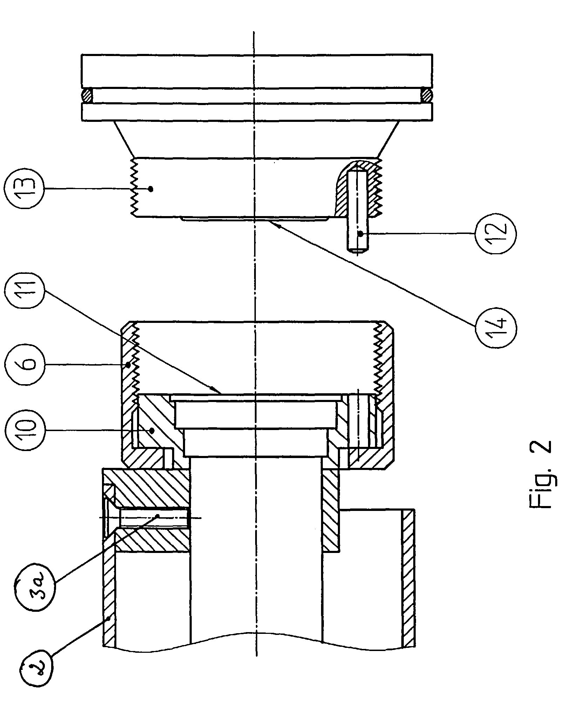

Eine besondere Ausgestaltung der Erfindung ist die Anordnung von Key-way 12 im Anschluß- und Dichtkörper 13, der im Anschluß- und Dichtkörper 10 eine entsprechende Bohrung hat, wie Fig.2 zeigt. Key-way 12 dient der schnellen Positionierung des Brenners bei einem arbeitsbedingten Wechsel. Anschluß- und Dichtkörper 13 sitzt auf der Brennerhalsaufnahme 7. Absaugstutzen 3 ist auf dem Absaugrohr 2 nach links in Richtung Brennerspitze verschiebbar und legt somit Überwurfmutter 6 frei. Dadurch ist ein Brennerwechsel unkompliziert und mit Unterstützung der Key-way-Anordnung unter Einhaltung der vorherigen Position durchführbar. Am Absaugstutzen 3 ist erfindungsgemäß ein Beipaß 4 angeordnet, über den die Rauchgase getrennt von der Griffschale des Schweiß- und Schneidbrenners abgezogen werden. Beipaß 4 ist anfangs als Rohr ausgebildet und geht später über in einen flexiblen, gewellten Schlauch, der leicht und beweglich und so den Arbeitsbewegungen des Schweißers nicht hinderlich ist. Beipaß 4 ist mit Absaugstutzen 3 auch fest verbunden und wird mit Absaugstutzen 3 über Absaugrohr 2 geschoben, um die Überwurfmutter 6 bei einem Brennerwechsel freizulegen. In Fig.2 sind Absaugstutzen 3 und Beipaß 4 nicht mit dargestellt. Eine erfindungsgemäße Variante ist der Ersatz des Absaugrohres 2 durch einen flexiblen gewellten Schlauch, bevorzugt aus Gummi. Diese Variante zeigt Fig.3. Absaugschlauch 15 wird analog Absaugrohr 2 in den Aufnahmering von Brennerhals 5 drehbar geklemmt. Die freie Beweglichkeit von Absaugrohr 2 oder Absaugschlauch 15 im Absaugstutzen 3 schafft die für den Schweißer notwendige Bewegungsfreiheit beim Schweißen und beugt zeitigem Ermüden vor. In Fig.3 ist der Anschluß des Schweiß- und Schneidbrenners an einen Automaten skizziert. In jeder Variante dichten angeordnete O-Ringe 9 die dreh- und wechselbare Verbindung zwischen Absaugrohr 2 oder Absaugschlauch 15 und Absaugstutzen 3 sicher ab. Die Erfindung ist eine vorteilhafte und sehr praktikable Lösung, die das Rauchgas vom Entstehungsort während des Schweiß- oder Schneidprozesses sofort und außerhalb vom Brennergriff (8) oder Automatenanschluß (8a) und Schlauchpaket, ohne die Arbeitskraft zu belästigen, entfernt und dabei keine besonders ausgebildeten Griffe oder Absaugdüsen erfordert und sowohl bei luft- als auch bei wassergekühlten Schweiß- und Schneidbrennern problemlos anwendbar ist.

## Patentansprüche

1. Schweiß- und Schneidbrenner, in luft- oder wassergekühlter Ausführung, mit Rauchgasabsaugung, bestehend aus über dem Brennerhals angeordnetem Absaugrohr und daran anschließend einem Absaugstutzen, dadurch gekennzeichnet, daß
das Absaugrohr (2) mit Brennerhals (5) im Absaugstutzen (3) im Bereich von 360^{o} drehbar vor der Griffschale (8) oder dem Automatenanschluß angeordnet ist, wobei Absaugstutzen (3) über Überwurfmutter (6) angeordnet ist.

2. Schweiß- und Schneidbrenner gem.Anspruch 1 dadurch gekennzeichnet, daß
an Absaugstutzen (3) Beipass (4) angeordnet ist, der mit Absaugstutzen (3) fest verbunden und zusammen mit Absaugstutzen (3) längs verschiebbar ist.

3. Schweiß- und Schneidbrenner gem.Anspruch 1 und 2 dadurch gekennzeichnet, daß
Beipass (4) als flexibler gewellter Schlauch aus Gummi ausgebildet ist.

4. Schweiß- und Schneidbrenner gem.Anspruch 1 dadurch gekennzeichnet, daß
Absaugrohr (2) mit Brennerhals (5) fest verbunden und beide mittels Überwurfmutter (6) lösbar an der Brennerhalsaufnahme (7) angeordnet sind.

5. Schweiß- und Schneidbrenner gem.Anspruch 1 dadurch gekennzeichnet, daß
auf dem Brennerhals (5), vor dem Aufnahmering, ein Mehrfach-Steg (3a) angeordnet ist, der in das Absaugrohr (2) greift.
